# FASCICULE DE BREVET EUROPEEN

(11) **EP 0 686 796 B1**
(45) Date de publication et mention de la délivrance du brevet: **10.09.1997**
(21) Numéro de dépôt: 95401142.5
(22) Date de dépôt: 17.05.1995
(51) Int. Cl.: F16L 3/10, F16L 3/24, H02G 3/26

(54) **Dispositif de support pour goulotte**
Stützvorrichtung für Kabelrinne
Support device for a cable chute

(30) Priorité: 09.06.1994 FR 9407166
(43) Date de publication de la demande: 13.12.1995
(73) Titulaire: SCHNEIDER ELECTRIC SA, 92100 Boulogne Billancourt (FR)
(72) Inventeur: Jego, Gérard, F-21470 Brazey en Plaine (FR); Thierry, Jean-Pierre, F-21560 Arc-sur-Tille (FR); Nourry, Daniel, F-21000 Dijon (FR)
(74) Mandataire: Saint Martin, René

(56) Documents cités:
- GB-A- 1 194 478
- US-A- 3 809 799
- US-A- 5 109 580
- US-A- 5 305 978

## Description

La présente invention concerne un dispositif de support pour une goulotte associée à une canalisation électrique préfabriquée, comportant une pièce de support munie de pinces entre lesquelles se loge la canalisation.

Les systèmes de distribution de courant à des bâtiments intérieurs sont usuellement constitués par des canalisations électriques comprenant des conducteurs et suspendues à un support, par exemple un plafond, grâce à des pièces de suspension. Des appareils électriques, tels que des luminaires, peuvent ensuite être suspendus et connectés à ces canalisations. Il est parfois nécessaire, ultérieurement à une telle installation, d'ajouter des fils ou câbles supplémentaires, qui sont habituellement logés dans une goulotte suspendue à la canalisation; toutefois ce dispositif maintenu en dessous de la canalisation empêche une fixation suspendue des appareils électriques.

La présente invention remédie à cet inconvénient par un dispositif de support qui maintient en place de manière simple au dessus de la canalisation une goulotte adaptée à loger des fils supplémentaires.

Le dispositif comporte une pièce de support munie de pinces qui sont articulées et assemblées entre elles par des moyens d'assemblage et de pivotement, et comprennent chacune une âme et une aile. Le dispositif est caractérisé en ce que les pinces dégagent entre elles et au-dessus de la canalisation un logement adapté à recevoir la goulotte et comprennent des saillies supérieures de maintien pour maintenir transversalement la goulotte.

Les pinces appartiennent à une pièce métallique plate obtenue par découpe. L'invention réalise ainsi une pièce de faible prix de revient, aisée à mettre en place autour de la canalisation par son faible volume et pouvant être notamment accolée aux pièces de suspension des canalisations.

Les ailes des pinces sont assemblées entre elles et le logement est formé entre les saillies de maintien et les tranches externes des ailes assemblées.

Les saillies de maintien présentent chacune un décrochement dans lequel peut s'introduire une nervure formée sur les parois latérales de la goulotte ayant une forme en U.

Enfin les ailes présentent respectivement une patte d'appui latérale destinée à s'appuyer sur la paroi supérieure de la canalisation en vue de maintenir la pièce de support en équilibre dans un plan perpendiculaire à l'axe longitudinal de la canalisation.

La description faite ci-après en regard des dessins fera ressortir les caractéristiques et avantages de l'invention.

Aux dessins annexés:
- la figure 1 est une vue en perspective de la pièce de support selon l'invention;
- la figure 2 est une vue en élévation de la pièce de support associée à la goulotte;

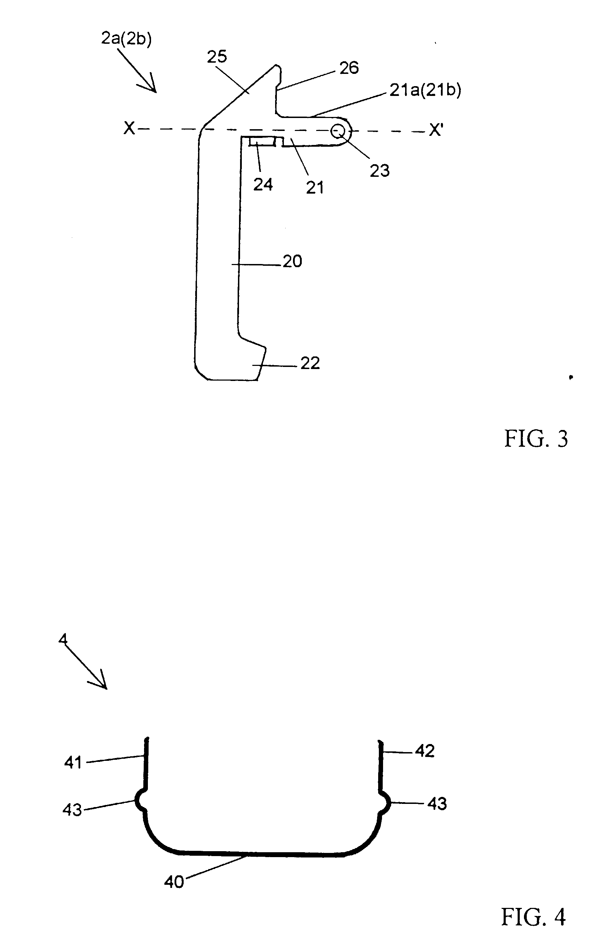

- la figure 3 est une vue en élévation d'une pince de la pièce de support;
- la figure 4 est une vue en élévation de la goulotte.

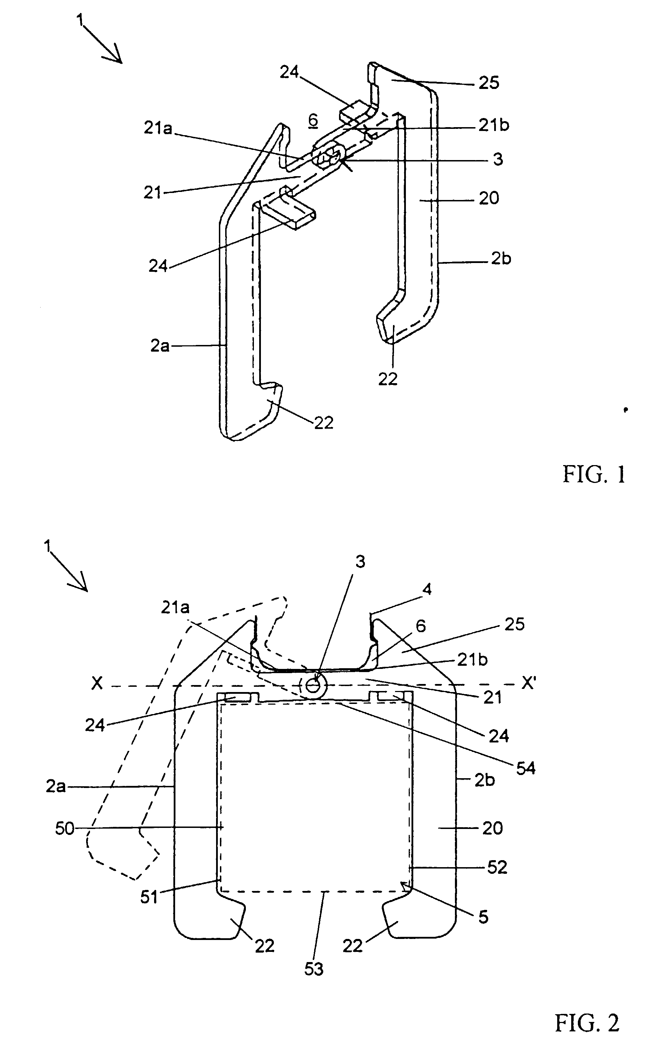

La pièce de support, repérée 1 sur les figures 1 et 2, est une pièce métallique plate obtenue par découpe. Elle est destinée à se fixer autour d'une canalisation électrique préfabriquée 5 comprenant une enveloppe métallique 50 parallélépipédique à quatre parois, latérales 51, 52, inférieure 53, et supérieure 54.

La pièce de support 1 présente une forme plate en étrier, elle comprend deux pinces identiques symétriques 2a et 2b, de forme en L, fixées et articulées entre elles par des moyens d'assemblage et de pivotement 3.

Une pince comprend une âme 20 et une aile 21 destinées respectivement à s'appuyer par leurs bords étroits contre la paroi latérale 51 ou 52 et contre la paroi supérieure 54 de la canalisation. L'âme 20 présente à son extrémité libre une patte d'accrochage 22 destinée à s'appliquer sous la paroi inférieure 53. L'aile 21 présente un orifice 23 à son extrémité libre, une patte d'appui pliée latéralement 24 et destinée à s'appuyer sur la paroi supérieure 54, ainsi qu'une saillie supérieure de maintien 25 en prolongement à l'âme 20 et au-dessus de l'aile 21, destinée à maintenir une goulotte 4 parallèlement à la paroi supérieure 54.

Les orifices respectifs 23 des pinces 2a et 2b coopèrent avec les moyens d'assemblage et de pivotement 3, qui consistent de préférence en un rivet, de manière à assembler et à articuler les pinces entre elles autour d'un axe perpendiculaire à l'axe longitudinal XX' des ailes 21. Les pinces ne sont verrouillées qu'après le montage de la pièce autour de la canalisation et la fixation de la goulotte à la pièce de support.

Les pattes respectives 24 des pinces 2a et 2b faisant saillie perpendiculairement à l'axe XX' et parallèlement au plan de la paroi supérieure de la canalisation s'appuient sur la paroi supérieure 54 et sont orientées de façon opposées en vue de maintenir la pièce 1 en équilibre dans un plan perpendiculaire à l'axe longitudinal de la canalisation, lorsque la pièce n'est pas encore verrouillée autour de la canalisation.

La saillie de maintien 25 présente sur son bord interne un décrochement 26. Les saillies de maintien respectives 25 des pinces 2a et 2b sont en regard et dégagent avec les tranches externes 21a et 21b des ailes 21 un logement 6 qui, lorsque la pièce 1 embrasse la canalisation, est destiné à loger la goulotte 4 et à la maintenir fixée grâce aux décrochements 26.

La goulotte 4 est une tôle pliée en U comprenant une paroi de fond 40 destinée à reposer sur les tranches externes 21a et 21b des ailes 21, ainsi que des parois latérales 41 et 42 qui présentent sur leur face externe une nervure longitudinale 43 destinée à s'introduire dans le décrochement 26 pour maintenir la goulotte 4 dans le logement 6.

Le fonctionnement du dispositif de l'invention va maintenant être décrit.

La pièce de support 1 seule n'étant pas verrouillable, on peut écarter facilement les pinces pour ouvrir l'étrier; la pièce est amenée sur le dessus de la canalisation de manière à entourer la canalisation entre les pinces 2a et 2b, les tranches internes des ailes, opposées aux tranches 21a et 21b, s'appuyant grâce aux pattes d'appui 24 contre la paroi supérieure de la canalisation. On fait ensuite pivoter les pinces contre la canalisation de manière que la pièce embrasse les parois latérales 51 et 52 et que les pattes d'accrochage 22 s'appuient contre la paroi 53.

On dispose ainsi sur la canalisation plusieurs pièces de support qui restent maintenues en position d'équilibre grâce aux pattes d'appui 24. La goulotte est ensuite positionnée et retenue dans un chemin établi par les logements 6 dégagés entre les saillies de support 25, les nervures 43 des parois latérales venant s'encliqueter dans les décrochements 26 des saillies. La goulotte encliquetée empêche le pivotement des pinces et permet ainsi de verrouiller la pièce autour de la canalisation.

## Revendications

1. Dispositif de support pour goulotte comportant une pièce de support (1) munie de pinces (2a,2b) entre lesquelles se loge une canalisation (5), les pinces étant articulées et assemblées entre elles par des moyens d'assemblage et de pivotement (3), et comprenant chacune une âme (20) et une aile (21), caractérisé en ce que les pinces dégagent entre elles et au-dessus de la canalisation un logement (6) adapté à recevoir une goulotte (4) et comprennent des saillies supérieures de maintien (25) pour maintenir transversalement la goulotte.

2. Dispositif de support selon la revendication 1, caractérisé en ce que les pinces appartiennent à une pièce métallique plate obtenue par découpe, en ce que les ailes (21) des pinces sont assemblées entre elles et en ce que le logement (6) est formé entre les saillies de maintien (25) et les tranches externes (21a, 21b) des ailes (21) assemblées.

3. Dispositif de support selon la revendication 2, caractérisé en ce que les saillies de maintien (25) présentent chacune un décrochement (26).

4. Dispositif de support selon la revendication 1, caractérisé en ce que la goulotte a une forme en U et comprend une paroi de fond (40) et des parois latérales (41, 42) qui présentent sur leur face externe une nervure longitudinale (43).

5. Dispositif de support selon la revendication 4, caractérisé en ce que la paroi de fond (40) de la goulotte peut reposer sur les tranches externes (21a, 21b) des ailes (21), et que la nervure (43) peut s'introduire dans le décrochement (26).

6. Dispositif de support selon la revendication 1, caractérisé en ce que les ailes (21) présentent respectivement une patte d'appui latérale (24) destinée à s'appuyer sur la paroi supérieure de la canalisation en vue de maintenir la pièce de support (1) en équilibre dans un plan perpendiculaire à l'axe longitudinal de la canalisation.

7. Dispositif de support selon la revendication 1, caractérisé en ce que les moyens d'assemblage et de pivotement (3) consistent en un rivet.

## Patentansprüche

1. Stützvorrichtung für Rinnen, bestehend aus einem Stützteil (1) mit Greifern (2a, 2b), zwischen denen eine Leitung (5) angeordnet ist, wobei die Greifer anhand von Montage- und Drehteilen (3) miteinander verbunden und gelenkig gelagert sind und jeweils ein Kernstück (20) und einen Flügel (21) aufweisen, dadurch gekennzeichnet, daß die Greifer zueinander und über der Leitung eine für die Rinne (4) geeignete Aufnahme (6) bilden und obere Haltevorsprünge (25) aufweisen, um die Rinne in Querrichtung festzuhalten.

2. Stützvorrichtung nach Anspruch 1, dadurch gekennzeichnet, daß die Greifer Bestandteile eines flachen, gestanzten Metallteils sind, daß die Flügel (21) der Greifer miteinander verbunden sind, und daß die Aufnahme (6) zwischen den Haltevorsprüngen (25) und den Außenkanten (21a, 21b) der zusammengesetzten Flügel (21) ausgebildet ist.

3. Stützvorrichtung nach Anspruch 2, dadurch gekennzeichnet, daß die Haltevorsprünge (25) jeweils eine Aussparung (26) aufweisen.

4. Stützvorrichtung nach Anspruch 1, dadurch gekennzeichnet, daß die Rinne U-förmig ist und eine Bodenwand (40) und Seitenwände (41, 42) umfaßt, die an ihrer Außenseite eine Längsrippe (43) aufweisen.

5. Stützvorrichtung nach Anspruch 4, dadurch gekennzeichnet, daß die Bodenwand (40) der Rinne auf den Außenkanten (21a, 21b) der Flügel (21) ruhen kann, und daß die Rippe (43) sich in die Aussparung (26) einfügen kann.

6. Stützvorrichtung nach Anspruch 1, dadurch gekennzeichnet, daß die Flügel (21) jeweils eine seitliche Stützlasche (24) aufweisen, die sich an der oberen Wand der Leitung abstützt, um das Stützteil (1) in einer lotrecht zur Längsachse der Leitung verlaufenden Ebene im Gleichgewicht zu halten.

7. Stützvorrichtung nach Anspruch 1, dadurch gekennzeichnet, daß die Montage- und Drehmittel (3) aus einer Niete bestehen.

## Claims

1. Channel supporting device including a support member (1) having clamps (2a, 2b) between which trunking (5) is accommodated, the clamps being articulated and assembled together by assembly and pivot means (3) and each comprising a web (20) and a flange (21), characterised in that the clamps define between them and above the trunking a housing (6) adapted to receive a channel (4) and having projections (25) at the top to hold the channel transversely.

2. Support device according to claim 1 characterised in that the clamps are part of a flat member stamped from sheet metal, in that the flanges (21) of the clamps are assembled together and in that the housing (6) is formed between the holding projections (25) and the outside edges (21a, 21b) of the assembled flanges (21).

3. Support device according to claim 2 characterised in that the holding projections (25) each incorporate a recess (26).

4. Support device according to claim 1 characterised in that the channel is U-shape in section and has a bottom wall (40) and side walls (41, 42) which have a longitudinal rib (43) on their outside face.

5. Support device according to claim 4 characterised in that the bottom wall (40) of the channel can rest on the outside edges (21a, 21b) of the flanges (21) and in that the rib (43) can be inserted in the recess (26).

6. Support device according to claim 1 characterised in that the flanges (21) have respective lateral bearing lugs (24) adapted to bear against the top wall of the trunking to hold the support member (1) in equilibrium in a plane perpendicular to the longitudinal axis of the trunking.

7. Support device according to claim 1 characterised in that the assembly and pivot means (3) comprise a rivet.
